Europäisches Patentamt

(19) European Patent Office

Office européen des brevets

(11) Numéro de publication: **0 086 713**
**B1**

(12) **FASCICULE DE BREVET EUROPEEN**

(51) Int. Cl.⁴: **F 16 B 21/07,** F 16 D 1/08,
E 05 B 3/00

(54) **Dispositif d'assemblage de pièces devant être mises en mouvement.**

(45) Date de publication du fascicule du brevet:
**23.04.86**

(21) Numéro de dépôt: **83400286.7**

(22) Date de dépôt: **10.02.83**

(30) Priorité: **17.02.82 FR 8202560**

(43) Date de publication de la demande:
**24.08.83 Bulletin 83/34**

(45) Mention de la délivrance du brevet:
**23.04.86 Bulletin 86/17**

(84) Etats contractants désignés:
**BE DE GB IT NL**

(56) Documents cités:
**EP - A - 0 029 475**
**CH - A - 420 737**
**DE - A - 1 930 679**
**FR - A - 1 366 109**
**FR - E - 16 721**
**US - A - 750 675**

(73) Titulaire: **PROCEDES ALLIENNE, 657 Boulevard Balzac
St Aygulf, F-83600 Fréjus (FR)**

(72) Inventeur: **Micheaux, Pierre, 657 Boulevard Balzac,
F-83600 Fréjus (FR)**

(74) Mandataire: **Cuer, André, CABINET CUER 30, rue de
Léningrad, F-75008 Paris (FR)**

ACTORUM AG

## Description

La présente invention est relative à un assemblage de pièces devant être mises en mouvement, notamment en rotation, par action sur l'une des pièces.

On connait déjà par le brevet français n° 1366109 un assemblage de pièces de révolution, par exemple d'une poignée sur une manivelle selon lequel au moins un tenon de l'une des pièces est engagé élastiquement dans au moins une gorge pratiquée dans l'autre pièce. Cet assemblage, bien que facile à monter, ne présente cependant pas une résistance mécanique suffisante lorsqu'on exerce par exemple un effort sur l'une des pièces. En effet, dans ce cas, le tenon peut sortir de la gorge correspondante et l'assemblage est alors supprimé.

On connait en outre, par le brevet DE-A-1930679, un assemblage d'éléments aptes à être mises en mouvement, qui comprend un premier élément en forme de barre dans une cavité longitudinale duquel sont formées une pluralité de dents, un second élément entourant le premier et comportant une languette souple mince qui vient s'engager dans l'une desdites dents, et un troisième élément fixé sur le second par un moyen à vis d'arrêt et bloquant l'extrémité de ladite languette souple dans sa dent associée. Un tel dispositif présente cependant plusieurs inconvénients. Tout d'abord, sa résistance mécanique est limitée, car la languette souple relativement mince, risque de se tordre sous l'action d'une force externe importante. Ensuite il nécessite des moyens, sous la forme d'un quatrième élément en forme de vis, pour assurer le blocage du troisième élément sur le second.

Le nouveau système de liaison selon la présente invention vise à supprimer ces inconvénients. Il permet en effet d'exercer un effort sur l'une des pièces, destiné par exemple à faire tourner l'ensemble, sans qu'il y ait risque de démonter involontairement cet ensemble.

L'assemblage conforme à l'invention comporte essentiellement au moins trois éléments dont un premier constitué par un axe ou une barre centrale muni d'une ou plusieurs mortaises ou gorges dans laquelle ou lesquelles s'engagent élastiquement un ou plusieurs tenons prévu sur un deuxième élément qui entoure le premier sur une partie de sa hauteur, le troisième élément, qui entoure les deux premiers et se trouve éventuellement associé à d'autres éléments, assurant la cohésion de l'ensemble.

Ce nouveau système de l'invention présente une grande facilité de montage. Il comporte une bonne résistance mécanique grâce à la coopération des éléments précités, dont le troisième, éventuellement en association avec des éléments supplémentaires, assure le blocage des tenons du second dans les mortaises du premier.

Ainsi, la présente invention concerne un assemblage conforme à la revendication 1 ci-après.

Des modes de réalisation et variantes de l'invention sont exposés dans les revendications dépendantes 2 à 9.

L'invention est maintenant décrite plus en détail au moyen de plusieurs exemples de réalisation non limitatifs qui se réfèrent aux dessins annexés sur lesquels les mêmes chiffres de référence ou symbole désignent les mêmes pièces ou éléments et où:

Fig. 1 est une vue partiellement en coupe longitudinale représentant un premier mode de réalisation de l'invention;

Figs. 2, 3 et 4 sont des illustrations en coupe transversale du mode de réalisation de la fig. 1;

Fig. 5 est une vue partiellement en coupe longitudinale représentant l'application de l'assemblage conforme à l'invention à une poignée de porte dite «bec de cane»;

Fig. 6 est une vue partielle en coupe longitudinale représentant un deuxième mode de réalisation de l'invention dans lequel une série de tenons sur le deuxième élément est engagée élastiquement dans une série d'empreintes en creux sur le premier élément ou la barre centrale;

Fig. 7 illustre une variante de réalisation de l'assemblage conforme à l'invention, qui comporte cette fois quatre éléments;

Figs. 8, 9, 10 et 11 sont des vues en coupe transversale du mode de réalisation représenté sur la fig. 7;

Fig. 12 représente la coupe longitudinale d'une autre sous-variante de l'assemblage de l'invention comportant également quatre éléments;

Figs. 13, 14, 15 et 16 sont des vues partielles en coupe transversale de la variante représentée sur la fig. 12;

Fig. 17 est une coupe longitudinale représentant un quatrième mode de réalisation de l'assemblage conforme à l'invention, comportant cinq éléments;

Figs. 18, 19, 20, 21 illustrent des coupes transversales du mode de réalisation de la fig. 17;

Fig. 22 représente enfin un mode de fixation d'une poignée sur l'un des assemblages tels que décrits, avec variante sur fig. 23.

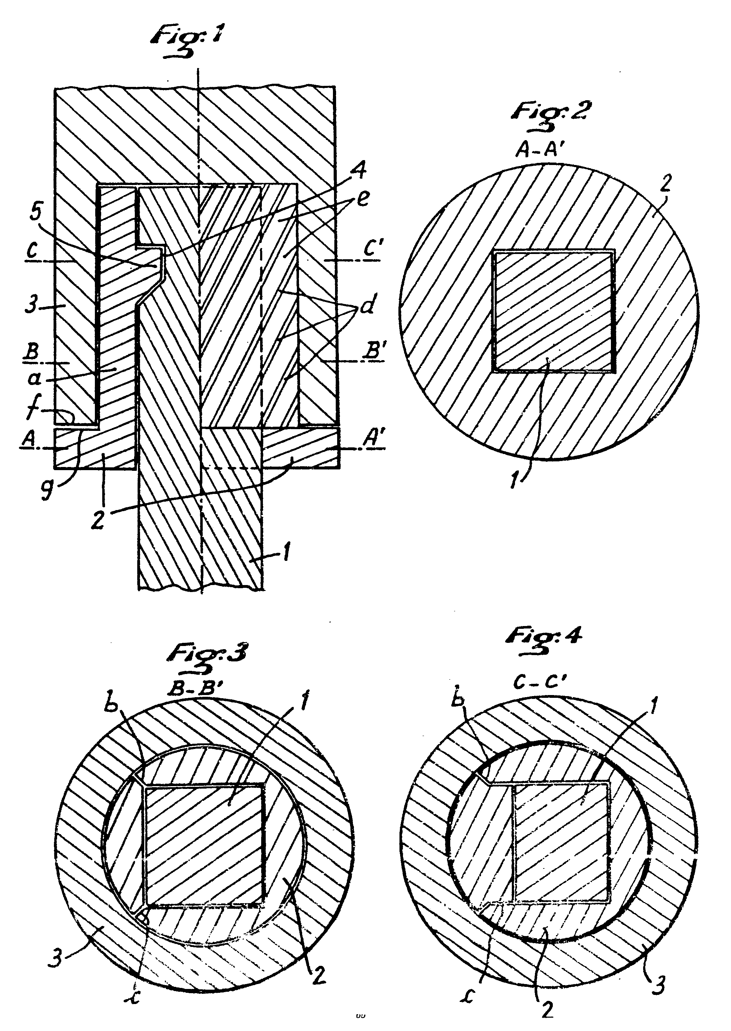

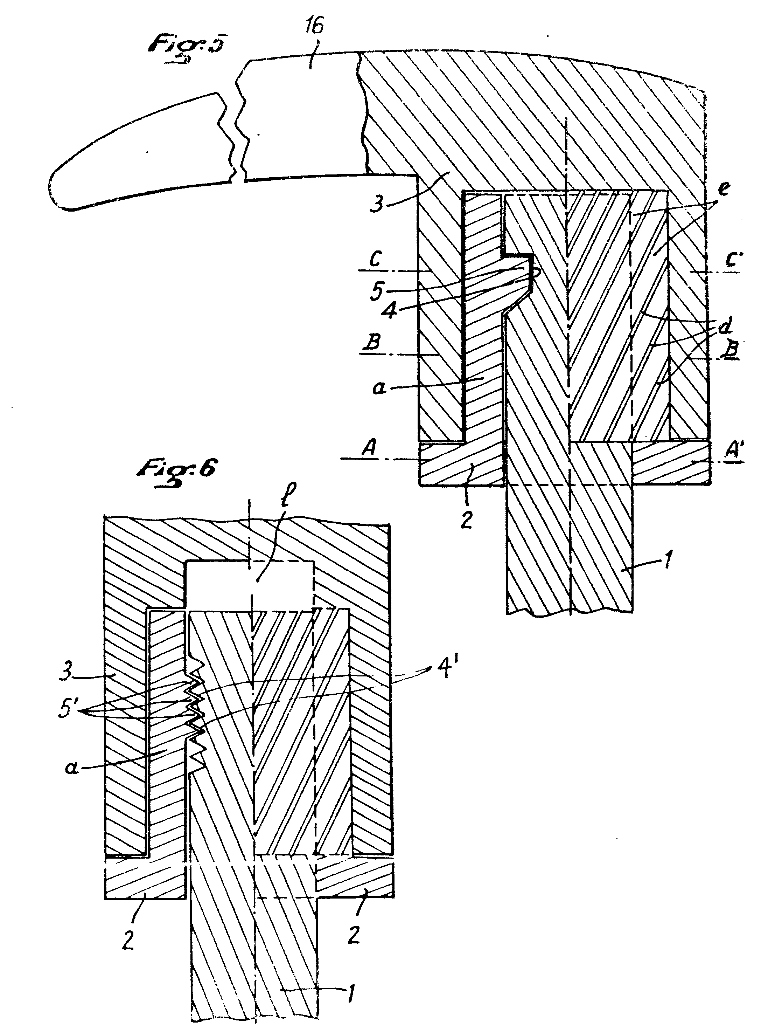

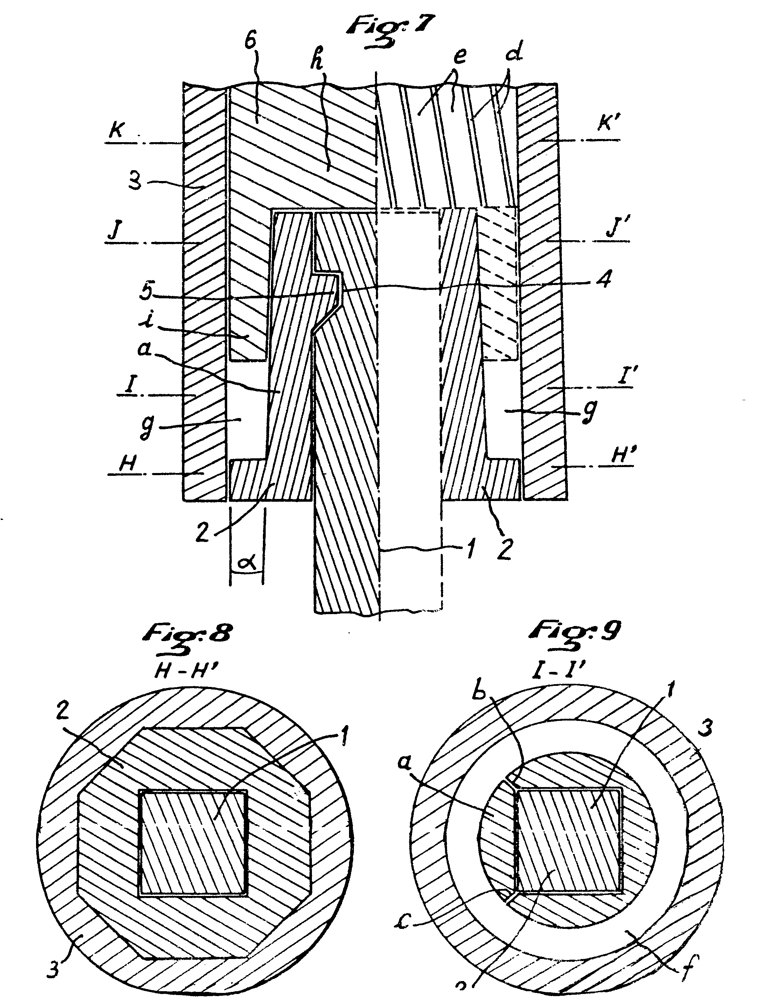

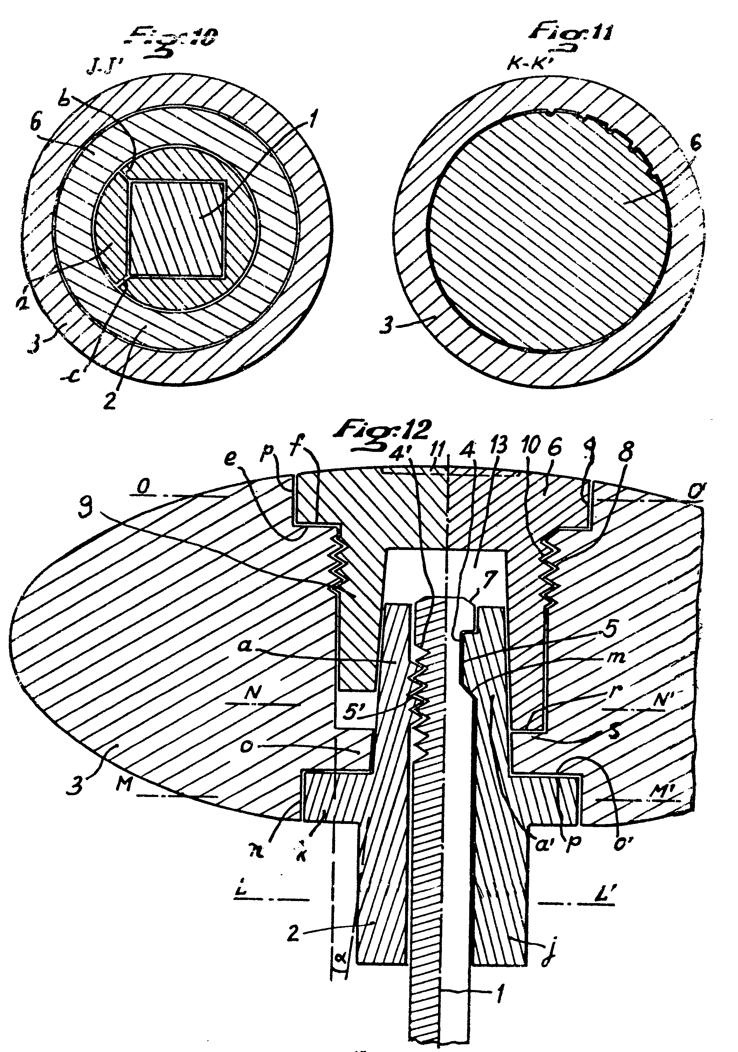

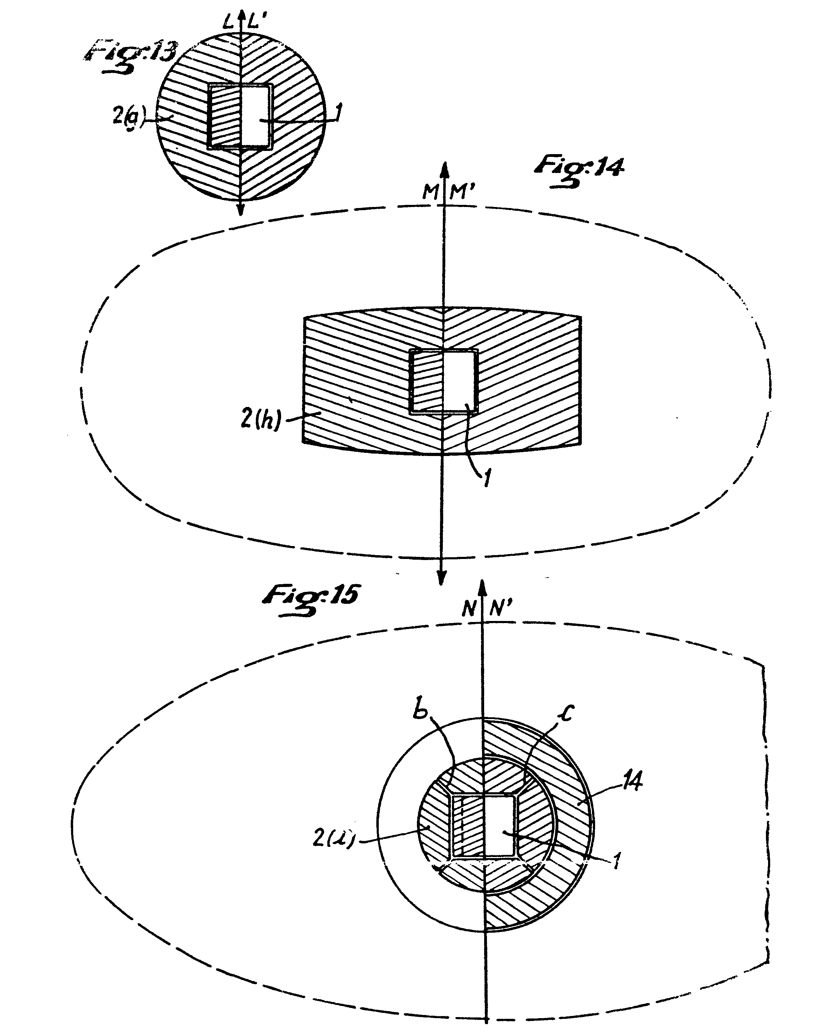

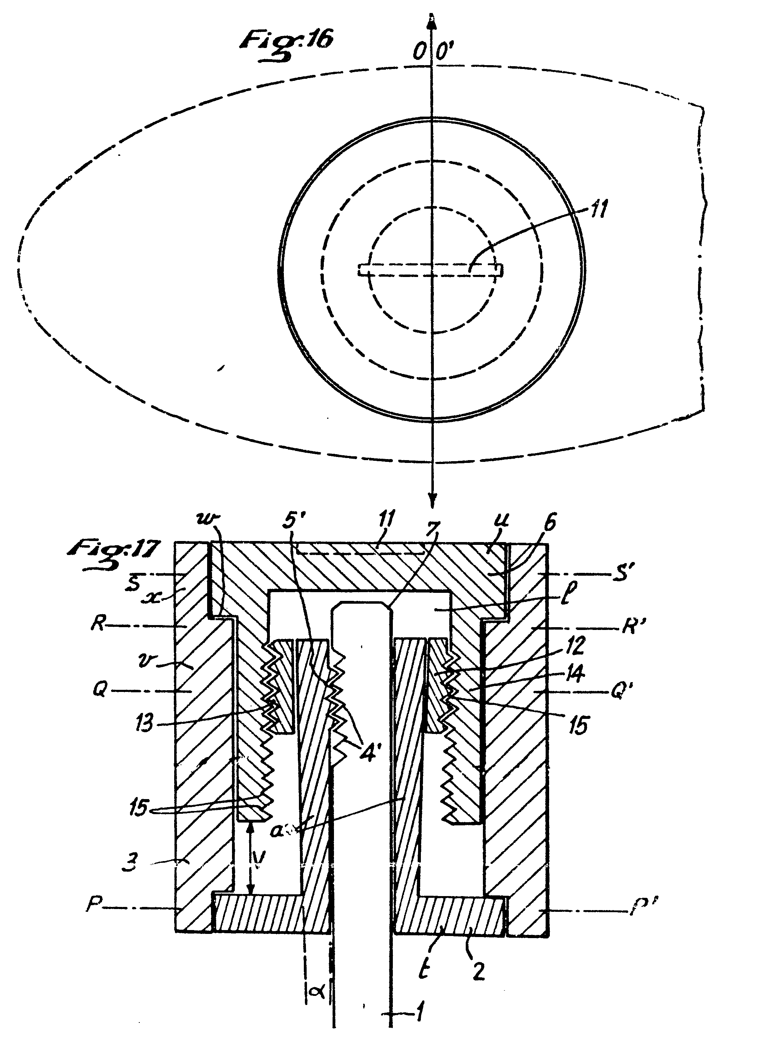

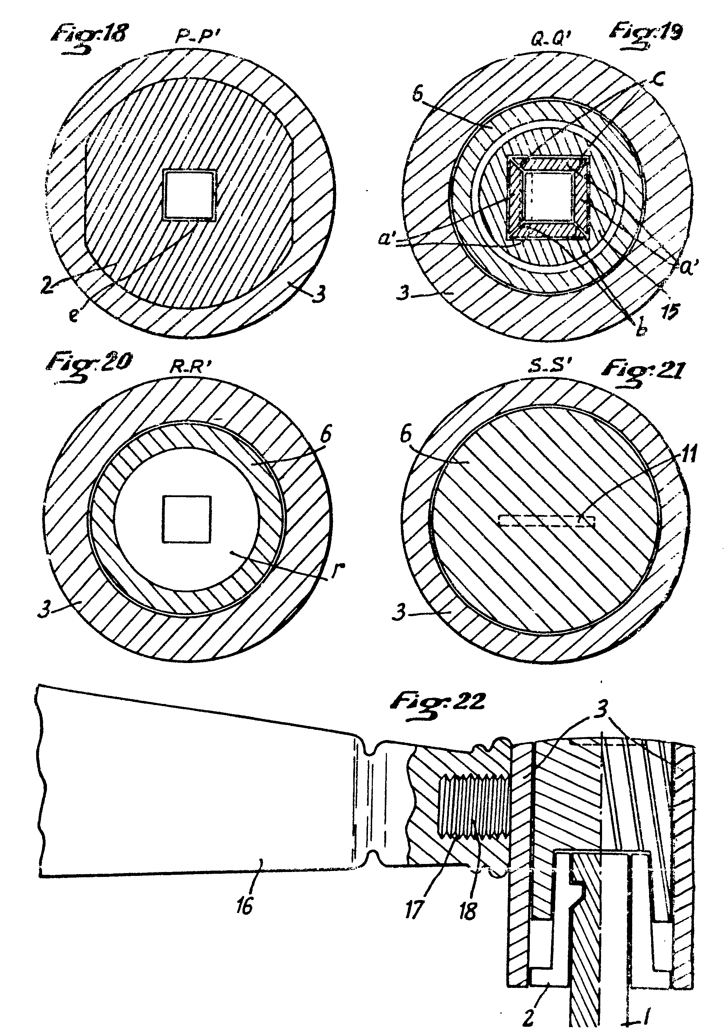

Le premier mode de réalisation représenté sur les figs. 1, 2, 3 et 4 comporte un axe ou une barre centrale 1 constituant le premier élément, un deuxième élément 2 monté sur la barre centrale 1 et une pièce 3 ou le troisième élément qui vient coiffer l'élément 2.

Une mortaise 4 est prévue sur une face de la barre centrale 1, dans laquelle vient s'engager élastiquement un tenon 5 présent sur une languette souple a de l'élément 2, cette languette a étant partiellement séparée de l'élément 2 par des fentes b et c (figs. 3 et 4) afin de permettre la mise en place et l'enlèvement de l'élément 2 de la barre centrale 1.

L'élément 2 comporte une lumière intérieure de section carrée, le jeu étant calculé suivant la matière utilisée pour la réalisation de ces pièces.

Grâce à l'élasticité de la languette a et, comme déjà indiqué, grâce aux fentes b et c, le tenon 5 peut être écarté de sa position normale afin de permettre l'introduction de la barre 1. Cette élasticité de la languette a ramène le tenon 5 dans sa position normale lorsqu'il se trouve en regard de la mortaise 4.

L'élément 2 présente à sa base et extérieurement une forme cylindrique (fig. 2). La face extérieure de cet élément, dans sa partie réduite, est également cylindrique. Cette surface cylindrique présente une série d'empreintes en relief hélicoïdales d ayant un pas approprié.

L'élément 3 comporte une surface cylindrique intérieure ayant une série d'empreintes hélicoïdales e en creux, à pas approprié, correspondant aux empreintes d de l'élément 2. La pièce 3 est mise en place sur l'élément 2 en lui faisant subir une rotation. A la fin de la course de la pièce 3, sa face f en forme de couronne vient se plaquer contre la face g correspondante de l'élément 2. La pièce 3 assure ainsi la cohésion de l'ensemble, elle maintient en place l'élément 2 avec son tenon 5 engagé dans la mortaise 4; la solidarité en rotation étant par ailleurs aussi assurée par la section transversale carrée de la barre 1 et de la lumière de l'élément 2.

La fig. 5 illustre l'application de l'assemblage susdécrit à une poignée de porte dite «bec de cane», dont le mouvement actif s'effectue toujours dans le même sens, c'est-à-dire du haut vers le bas. Chaque mouvement tend à verrouiller le système. Le déverrouillage s'effectue aisément en bloquant la barre 1 et en soumettant la poignée 16 à un mouvement de sens inverse, c'est-à-dire de bas en haut.

L'élément 3, qui dans ce cas s'identifie à la poignée 16, peut être retiré par rotation en sens invers à celui qui produit le verrouillage. En écartant la languette a, on dégage le tenon 5 de la mortaise 4 et il est alors possible de retirer la barre 1 de l'élément 2.

Pour réaliser un ensemble «bec de cane» pour porte, la barre 1 peut être libre et comporter une mortaise à chacune de ses extrémités et elle est alors accompagnée de deux systèmes d'éléments 2 et 3 tels que décrits ci-dessus. La barre 1 peut être réalisée en différentes longueurs correspondant à des épaisseurs de portes différentes.

On peut également souder directement par un procédé de moulage la barre 1 dans une poignée «bec de cane» et elle est alors livrée avec un seul ensemble d'éléments 2 et 3.

Suivant une deuxième variante de l'invention, représentée sur la fig. 6, le tenon 5 peut être avantageusement remplacé par une série de plusieurs tenons 5' plus petits (quatre dans la présente variante) qui peuvent de préférence être de forme triangulaire. La barre 1 comporte alors une série d'empreintes en creux 4' correspondantes, en nombre plus élevé afin de permettre un réglage de la position relative des éléments (sept dans la présente variante).

Comme pour le mode de réalisation décrit précédemment, le montage des tenons 5' sur une languette souple a permet l'introduction aisée de la barre 1 au travers de l'élément 2.

Les autres caractéristiques des éléments 2 et 3 étant identiques à celles dans le mode de réalisation ci-dessus, le verrouillage s'effectue de la même façon. Cependant, l'élément 3 présente en espace intérieur libre e et la barre peut être ainsi introduite plus au moins profondément; ce qui permet, comme déjà indiqué, un réglage de la position relative des éléments, suivant l'épaisseur de la porte. Ainsi, il n'est plus nécessaire de prévoir des barres de différentes longueurs pour tenir compte des diverses épaisseurs de portes.

Dans le troisième mode de réalisation illustré sur les figs. 7, 8, 9, 10 et 11 et comportant quatre éléments 1, 2, 3 et 6, la barre 1 est de section carrée et comprend une mortaise 4 comme dans le premier mode de réalisation. L'élément 2 monté sur la barre 1 présente à sa base une section à pourtour polygonal (octogonal dans cet ensemble). La lumière de l'élément 2 dans laquelle est engagée la barre 1 est de section carrée.

Comme on le voit sur la fig. 7, l'élément 2 est extérieurement de forme conique. Cette pièce 2 comporte, comme pour le mode de réalisation de la fig. 1, un tenon 5 relié à la pièce 2 par une languette élastique a partiellement séparée de l'ensemble par des encoches b et c. L'élément 3 est, à son extrémité inférieure grâce à la forme octogonale de sa lumière intérieure, en prise avec la pièce 2 (fig. 8), la solidarité en rotation de ces pièces étant ainsi assurée. Au-dessus de sa base, l'élément 3 a une forme intérieure cylindrique un espace libre g existant entre les éléments 2 et 3 (figs. 7 et 9).

La face conique extérieure de l'élément 2 est inclinée en coupe longitudinale d'un angle alpha sur l'axe de l'assemblage.

La face intérieure cylindrique de la pièce 3 présente une série d'empreintes en creux, hélicoïdales à pas approprié. Un élément supplémentaire 6 présente une surface extérieure cylindrique dans laquelle on prévoit une série d'empreintes en relief, hélicoïdales et correspondant aux empreintes en creux précitées. L'élément 6 comporte un noyau h plein cylindrique et une collerette i (figs. 7 et 10) dont la face externe est cylindrique, de même rayon que le noyau précité et donc dans son prolongement. La face interne de cette collerette est conique et forme également en coupe longitudinale un angle alpha avec l'axe de l'assemblage; comme ci-dessus. Cette collerette vient s'insérer entre la face interne de l'élément 3 et la face externe de l'élément 2.

Lorsqu'on engage l'élément 6 dans l'élément extérieur 3 en lui faisant subir une rotation, la collerette i vient s'insérer entre les éléments 2 et 3. La course du noyau h est calculée de telle manière qu'en fin de déplacement le blocage de l'élément 2 sur la barre 1 soit acquis, grâce à l'action de la collerette i agissant comme un coin, les éléments 2 et 3 étant également verrouillés.

Cet assemblage peut également être appliqué à l'obtention d'une poignée de porte dite «bec de cane» comme dans le cas de l'assemblage correspondant au premier mode de réalisation.

Un autre variante encore du mode de réalisation à quatre éléments est représentée sur les figs. 12, 13, 14, 15 et 16 et montre l'application de l'assem- de porte. Les quatre éléments incluent: une barre 1, un élément 2 cylindro-conique comportant intérieurement une lumière à section carrée, une poignée 3 et un bouchon 6.

La barre 1 de section carrée présente soit une mortaise 4 soit une série d'empreintes 4' en creux, triangulaires. L'élément 2 comprend trois parties:

– un cylindre j ayant une lumière intérieure de section carrée;

– une collerette k à lumière intérieure de section carrée, sa section ayant par ailleurs un pourtour extérieur permettant la prise avec l'élément (fig. 12);

– une partie conique à lumière intérieure de section carrée et à face externe conique, un tenon 5 ou une série de petits tenons 5' correspondant respectueusement aux empreintes en creux 4 et 4' de la barre 1. Ces tenons sont portés par une languette élastique a ou a' séparée partiellement du restant de l'élément 2 par deux encoches b et c longitudinales (fig. 15).

La barre 1 pénètre aisément dans l'élément 2 grâce au chanfrein 7 de son extrémité et au chanfrein m de l'élément 2. L'élasticité des languettes a ou a' ramène les tenons 5 ou 5' dans les mortaises 4 ou 4' correspondantes dès que la barre 1 est en place.

L'élément 3 est constitué par une poignée qui présente un évidement central comportant: une première partie n correspondant à la collerette k de l'élément 2; une collerette o délimitant une lumière conique avec en coupe longitudinale un angle d'inclinaison alpha par rapport à l'axe; une lumière cylindrique comportant un filetage 8; et enfin une partie évidée cylindrique p correspondant également à une collerette.

L'élément 2 s'emboite dans la pièce 3, la face interne de la collerette o venant s'appliquer sur la partie conique de la pièce 2.

L'élément 6 constituant le bouchon présente une collerette q, une partie 9 extérieurement cylindrique et intérieurement conique avec en coupe longitudinale un angle d'inclinaison alpha par rapport à l'axe. La surface extérieure cylindrique comporte un filetage 10 de même pas que le filetage 8 correspondant de la poignée 3. La surface intérieure conique délimité avec l'élément 2 une cavité permettant à la barre 1 de pénétrer plus ou moins profondément lorsque les tenons sont du type 5. La face externe de la pièce 6 comporte une fente 11 de visage.

La mise en place s'effectue comme décrit ci-dessous: La barre 1 pénètre dans l'élément 2 et grâce au chanfrein 7 écarte les tenons 5 ou 5', cet écartement étant rendu possible comme décrit pour les modes de réalisation ci-dessus, par leur disposition sur la languette élastique a ou a'. Lorsque la barre 1 arrive en place, le tenon 5 ou 5' s'engage dans la mortaise correspondante 4 ou 4'.

La pièce 3 est placée sur l'élément 2 comme déjà décrit. La mise en place de l'élément 6 ou du bouchon dans l'élément 3 s'effectue par vissage grâce à la fente 11, par exemple avec un tournevis. Lors de ce vissage, la partie 9 cylindro-conique s'insère entre les pièces 2 et 3, la face conique de blage de l'invention à l'obtention d'une poignée l'élément 6 s'appliquant sur la face conique de l'élément 2 et bloquant ainsi le ou les tenons dans les mortaises correspondantes. Pour le tenon unique 5, la face r de la pièce 6 vient s'appliquer contre la face S de la pièce 3 avec blocage du tenon dans la mortaise correspondante. Cette disposition n'est cependant pas indispensable pour le blocage.

Le déblocage s'effectue en dévissant la pièce 6 tout en maintenant fixe l'élément 3. Lorsque la pièce 6 est enlevée, on peut aisément enlever la pièce 3, la barre 1 étant extraite comme indiqué ci-dessus.

Comme déjà dit, lorsqu'on est, dans cette variante, en présence d'une série de tenons 5' au lieu d'un seul tenon 5, on peut régler la longueur libre de la barre 1 suivant l'épaisseur de la porte.

La différence essentielle dans cette dernière variante par rapport à l'autre mode de réalisation à quatre éléments consiste en ce que la poignée 3 comporte un taraudage 8 et en ce que l'élément 6, c'est-à-dire le bouchon, comporte un filetage 10 correspondant, ce qui rend l'assemblage encore plus solide.

Un quatrième mode de réalisation de l'assemblage de l'invention comprenant cinq éléments est représenté sur les figs. 17, 18, 19, 20 et 21. Dans cette variante, on trouve:

a) une barre centrale 1 de section carrée comportant une série de mortaises ou gorges 4' triangulaires et une extrémité chanfreinée 7;

b) un élément 2 formé d'une collerette-base t et d'une partie verticale sur la fig. 17. La base t possède une lumière intérieure de section carrée et un bord externe qui, vu en coupe transversale, est constitué par deux segments et deux secteurs (fig. 18). La partie verticale (sur la fig. 17) de l'élément 2 est formée de quatre languettes a' reliées à la base c et séparées entre elles par des fentes b et c. L'ensemble constitué par ces languettes a' présente intérieurement une lumière de section carrée, l'une d'entre elles comportant une série de tenons triangulaires 5'. L'ensemble des languettes est également limité extérieurement, en coupe transversale, par un pourtour carré qui s'agrandit à mesure qu'on s'éloigne de la base; le bord extérieur des languettes, en coupe longitudinale, formant un angle alpha avec l'axe.

c) un élément supplémentaire 12 de lumière intérieure de section carrée et qui présente extérieurement une surface cylindrique comportant un filetage 13 de pas approprié;

d) un élément 6, ou bouchon comportant deux parties, dont une partie cylindrique creuse 14 dont la face interne comporte un filetage 15 correspondant au filetage 13 précité de l'élément 12 et une couronne u qui délimite une cavité 1 avec la face supérieure des éléments 2 et 12 de manière à permettre le jeu de l'extrémité de la barre 1. La face extérieure de l'élément 6 comporte une fente 11 de vissage;

e) un élément 3 extérieurement cylindrique et qui comporte trois parties: une base correspondant intérieurement au profil de la base t de l'élément 2, un corps central cylindrique v en contact avec la face supérieure de la base t de l'élément 2 et avec la face inférieure w de l'élément 6, une collerette x supérieure, cylindrique intérieurement et extérieurement.

La mise en place des éléments de cet assemblage s'effectue comme suit:

– on introduit les languettes a' de l'élément 2 dans la lumière de l'élément 12. Cette introduction est rendue possible grâce aux fentes b et c appropriées et en utilisant un angle alpha approprié. L'élément 12 repose alors provisoirement sur la base t de l'élément 2 et les languettes élastiques a' reprennent leur position.

– on introduit la barre 1 au travers de l'élément 2 grâce aux chanfreins 7 de l'extrémité de la barre et à l'élasticité des languettes a', en particulier de celle qui comporte les petits tenons 5'. Après réglage de la longueur de la barre, les tenons 5' occupent leur place dans les mortaises 4' correspondantes et les languettes a' reprennent élastiquement leur position.

– on met en place l'élément 3 extérieur dont la collerette vient par sa face intérieure en prise avec la face extérieure de la base t de l'élément 2.

– on introduit la pièce 6 dans l'ensemble. Au moment où l'extrémité de la pièce 6 comportant un taraudage 15, vient buter sur la pièce 12 à filetage 13, on effectue une opération de vissage par exemple au moyen d'un tournevis qu'on fait agir au niveau de la fente 11. Les filets de l'élément 6 engrènent avec les filets de l'élément 12. L'élément 6 arrivant en w au contact de l'élément 3 et ne pouvant ainsi plus effectuer de mouvement de descente et l'élément 3 étant lui-même bloqué grâce à sa prise avec l'élément à la base, c'est l'élément 12 qui, immobilisée en rotation par les faces des languettes a', effectue une translation le long de ces languettes a' de l'élément 2.

L'élément 12 agissant comme un coin au cours de son ascension va progressivement bloquer d'une part les languettes s' sur la barre 1, d'autre part le bouchon 6 dans l'élément 3 en prenant appui sur les languettes a' solidaires de la barre 1. En fin d'opération de vissage on obtient un assemblage solidaire. Tout mouvement de rotation ou tout déplacement de l'élément 3 déterminera un mouvement similaire de l'élément 2 et, en conséquence, de la barre 1.

Le déblocage de l'ensemble s'effectue aisément. On maintient fixe la barre 1 ou l'élément 3 et on dévisse l'élément 6. Ce dévissage produit le coulissement de long des languettes a' de l'élément 12 vers la base de l'élément 2. Quand l'élément 12 est en fin de course, il prend appui sur la base de l'élément 2 et le bouchon 6 prend à son tour appui sur cet ensemble et par dévissage est extrait nécessairement de l'élément 3. Il ne reste alors qu'à extraire cet élément 3, puis en écartant la languette a porteuse des tenons, on dégage la barre 1 de l'élément 2. Enfin, on fait coulisser l'élément 12 le long des languettes a' et l'ensemble est ainsi séparé.

La fig. 22 représente la possibilité de fixation d'une poignée 16 sur un assemblage conforme à l'invention, tel que décrit ci-dessus. La poignée 16 est solidarisée à l'élément 3 au moyen d'un ensemble taraudage 17 et vis fileté 18.

Comme déjà indiqué ci-dessus l'assemblage conforme à l'invention peut être utilisé notamment lorsqu'on veut assembler des pièces devant être mises en mouvement et les rendre solidaires en rotation. Parmi les multiples applications, on peut citer tout particulièrement le montage des poignées de portes.

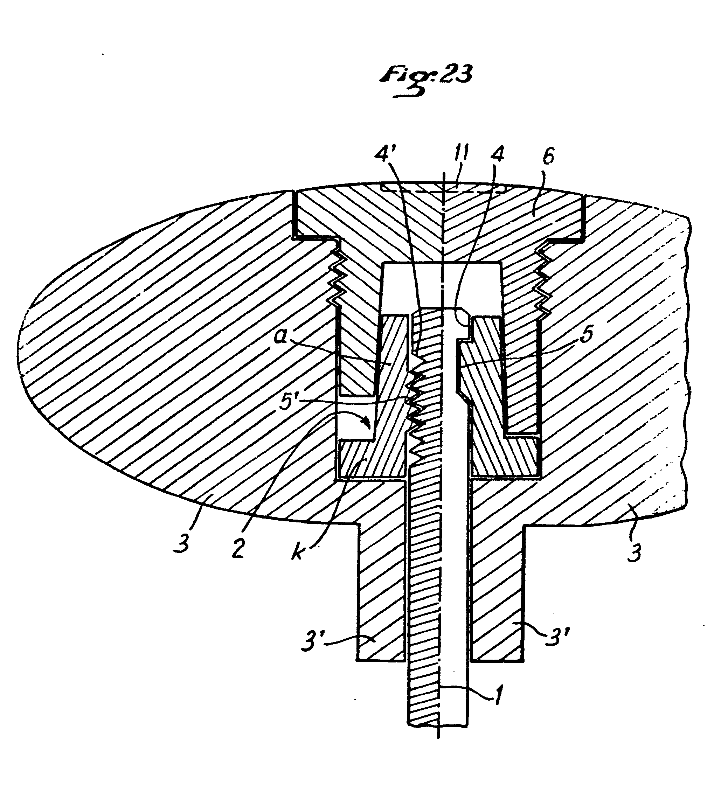

Il est bien entendu qu'on peut effectuer de nombreuses modifications en ce qui concerne les modes de réalisation décrits, sans sortir du cadre de l'invention. A cet égard, on citera une intéressante variante de la construction illustrée sur la fig. 12 et déjà décrite, en se reportant au mode de réalisation de la fig. 23. Dans ce dernier cas, l'élément 2 est dépourvu du prolongement cylindrique j (fig. 12) qui entourait l'axe ou barre 1, tout en conservant sa collerette k et sa languette conique a dont l'élasticité permet de maintenir les tenons 5 ou 5' dans les mortaises 4 ou 4' correspondants dès que la barre 1 est en place. En pratique, selon cette variante fig. 23, la poignée 3 revêt une conformation permettant à celle-ci, grâce aux ailes 3', de venir se serrer directement sur la barre 1. Ainsi en cas de desserrage de l'ensemble de la pièce 6 et de la poignée 3, il ne peut plus se produire de glissement le long de l'élément 2, la poignée 3 restant désormais bloqué.

## Revendications

1. Assemblage d'au moins trois éléments (1, 2, 3) agencés pour être mis en mouvement, notamment en rotation, par action sur l'un des éléments, le premier élément (1) étant constitué d'une barre dans laquelle est formée au moins une gorge ou mortaise (4), le second élément (2) entourant le premier élément (1) et comportant au moins une languette souple (a) sur laquelle est prévu au moins un tenon (5) qui s'engage dans la gorge ou mortaise (4), ces deux éléments étant par ailleurs rendus solidaires en rotation grâce à leur section transversale non circulaire dans au moins une partie de leur zone de contact, et le troisième élément (3) présentant un logement dans lequel s'engage le second élément (2), des moyens de liaison (d, e; 8) étant en outrrre prévus pour bloquer ensemble le second élément (2) et le troisième élément (3), caractérisé en ce que la languette souple (a) est bloquée intimement, sur au moins une partie de sa hauteur dans laquelle est prévu le tenon (5), entre le premier élément (1) et la face intérieure du logement du troisième élément (3).

2. Assemblage selon la revendication 1, caractérisé en ce que la surface extérieure du second élément (2) et la surface intérieure du logement du troisième élément (3) sont globalement cylindriques, et en ce que les moyens de liaison entre le second élément et le troisième élément comprennent une liaison par taraudage/filetage (8) ou par empreintes hélicoïdales en creux et en relief (d, e).

3. Assemblage selon l'une quelconque des revendications 1 et 2, caractérisé en ce qu'au moins une languette souple (a) du second élément comporte une pluralité de tenons (5'), et en ce qu'est formée dans le premier élément une série plus importante de gorges correspondantes (4'), ce qui permet de régler la position relative des éléments.

4. Assemblage selon l'une quelconque des revendications 1 à 3, caractérisé en ce que les tenons (5, 5') et les gorges (4, 4') sont de forme triangulaire en coupe longitudinale.

5. Assemblage selon la revendication 1, comportant quatre éléments (1, 2, 3, 6), caractérisé en ce que l'élément supplémentaire (6) s'engage entre le deuxième (2) et le troisième (3) en exerçant une action analogue à celle d'un coin sur le deuxième élément, la liaison entre le troisième (3) et le quatrième élément (6) étant assurée par des empreintes hélicoïdales en creux et en relief (d et e) ou des filetages (8, 10).

6. Assemblage selon la revendication 5, caractérisé en ce que l'action analogue à celle d'un coin du quatrième élément (6) est obtenue grâce à la forme conique de sa surface intérieure qui correspond à la surface conique extérieure du deuxième élément (2).

7. Assemblage selon la revendication 1 comportant cinq éléments (1, 2, 3, 6, 12), caractérisé en ce que les tenons (5') prévus sur une languette souple (a') de l'élément (2) s'engagent élastiquement dans certaines des mortaises correspondantes (4') du premier élément constituant la barre centrale (1), le troisième élément (3) constituant l'enveloppe extérieure, le blocage du deuxième élément (2) avec ses tenons (5') dans les mortaises (4') du premier élément (1) étant assuré par un cinquième élément (12) qui est en prise par un filetage (13) avec un taraudage (15) correspondant du quatrième élément qui constitue un bouchon (6).

8. Assemblage selon la revendication 7, caractérisé en ce qu'une fente extérieure (11) est formée dans le bouchon (6) pour permettre le vissage et le dévissage de celui-ci au moyen d'un tournevis ou d'une pièce de monnaie.

9. Assemblage suivant l'une quelconque des revendications 7 et 8, caractérisé en ce que le cinquième élément (12) comporte une face intérieure inclinée en coupe longitudinale d'un angle (α) par rapport à l'axe de l'assemblage, identique à l'angle d'inclinaison en coupe longitudinale de la face extérieure des languettes (a') de l'élément (2) au-dessus de la base (t) de ce dernier.

10. Utilisation d'un assemblage suivant l'une quelconque des revendications 1 à 9 pour la réalisation d'une poignée de porte.

**Patentansprüche**

1. Verbindung von mindestens drei Teilen (1, 2, 3) mit dem Ziel ihrer Bewegung, besonders Drehung, durch Einwirkung auf eines der Teile, wobei das erste Teil (1) aus einer Stange mit mindestens einer Auskehlung oder Aussparung (4) besteht, Stange, die vom zweiten Teil (2) umgriffen ist, das mindestens eine elastische Zunge (a) mit mindestens einem Zapfen (5) trägt, der in die Auskehlung oder Aussparung (4) eingreift, wobei die beiden Teile ausserdem aufgrund ihres nicht kreisförmigen Querschnittes in mindestens einem Teil ihres Berührungsbereiches drehfest miteinander verbunden sind, und das dritte Teil (3) eine Lagerung für das zweite Teil (2) aufweist und Verbindungsmittel (d, e; 8) vorgesehen sind, um das zweite Teil (2) und das dritte Teil (3) fest miteinander zu verbinden, dadurch gekennzeichnet, dass die elastische Zunge (a) zumindest in ihrem oberen Teil, an dem der Zapfen (5) angeordnet ist, zwischen dem ersten Teil (1) und der Innenseite der Lagerung des dritten Teiles (3) festgeklemmt ist.

2. Verbindung gemäss Anspruch 1, dadurch gekennzeichnet, dass die Aussenfläche des zweiten Teiles (2) und die Innenfläche der Lagerung des dritten Teiles (3) allgemein zylindrisch sind und dass die Verbindungsmittel zwischen dem zweiten und dem dritten Teil Innen-/Aussengewinde (8) oder schraubenförmige Vertiefungen und Erhöhungen (d, e) sind.

3. Verbindung gemäss einem der Ansprüche 1 und 2, dadurch gekennzeichnet, dass mindestens eine elastische Zunge (a) des zweiten Teiles mehrere Zapfen (5') trägt und dass im ersten Teil eine grössere Anzahl von entsprechenden Vertiefungen (4') vorgesehen sind, so dass die Lage der Teile zueinander verändert werden kann.

4. Verbindung gemäss einem der Ansprüche 1 bis 3, dadurch gekennzeichnet, dass die Zapfen (5, 5') und die Vertiefungen (4, 4') in Längsschnitt Dreiecksform aufweisen.

5. Verbindung gemäss Anspruch 1 mit vier Teilen (1, 2, 3, 6), dadurch gekennzeichnet, dass das zusätzliche Teil (6) sich zwischen das zweite (2) und das dritte Teil (3) einfügt und dabei eine keilartige Wirkung auf das zweite Teil ausübt, wobei die Verbindung zwischen dem dritten (3) und dem vierten Teil (6) durch schraubenförmige Vertiefungen und Erhöhungen (d und e) oder Gewinde (8, 10) hergestellt wird.

6. Verbindung gemäss Anspruch 5, dadurch gekennzeichnet, dass durch die konische Form der Innenfläche des vierten Teiles (6), die der konischen Aussenfläche des zweiten Teiles (2) entspricht, eine keilartige Wirkung erreicht wird.

7. Verbindung gemäss Anspruch 1 mit fünf Teilen (1, 2, 3, 6, 12), dadurch gekennzeichnet, dass die Zapfen (5') einer elastischen Zunge (a') des Teiles (2) elastisch in bestimmte der entsprechenden Aussparungen (4') des ersten Teiles eingreifen, das die zentrale Stange (1) darstellt, wobei das dritte Teil (3) die äussere Ummantelung bildet und die Fixierung des zweiten Teiles (2) mit seinen Zapfen (5') in den Aussparungen (4') des ersten Teiles (1) durch ein fünftes Teil (12) bewirkt wird, das durch ein Aussengewinde (13) in ein entsprechendes Innengewinde (15) des vierten Teiles eingreift, das einen Verschluss (6) darstellt.

8. Verbindung gemäss Anspruch 7, dadurch gekennzeichnet, dass der Verschluss (6) einen äusseren Schlitz (11) trägt, um das Ein- und Ausschrauben des Verschlusses mit Hilfe eines Schraubendrehers oder eines Geldstückes zu ermöglichen.

9. Verbindung gemäss einem der Ansprüche 7 und 8, dadurch gekennzeichnet, dass das fünfte Teil (12) eine im Längsschnitt um einen Winkel (α) zur Mittelachse der Verbindung geneigte Innenfläche aufweist, der dem Neigungswinkel in Längsschnitt der Aussenfläche der Zungen (a') des Teiles (2) oberhalb der Basis (t) dieses Teiles gleich ist.

10. Verwendung einer Verbindung gemäss einem der Ansprüche 1 bis 9 zur Herstellung eines Türgriffes.

**Claims**

1. Assembly comprising at least three elements (1, 2, 3) mounted in order to be set in motion, and especially rotated, by operating one of them, the first element (1) being constituted by a bar in which at least one groove or mortise (4) is formed, the second element (2) surrounding the first one (1) and comprising at least one flexible strip (a) on which at least one tenon (5) is provided for and fits into the groove or mortise (4), these two elements being also made integral in rotation with one another due to the fact that their cross-section is non-circular along at least one part of their contacting area, and the third element (3) comprising a housing into which the second element fits, connecting means (d, e; 8) being also provided for in order to clamp together the second element (2) and the third element (3), characterized by the fact that the flexible strip (a) is closely clamped, along at least one part of its height in which the tenon (5) is provided for, between the first element (1) and the inner face of the housing of the third element (3).

2. Assembly according to claim 1, characterized by the fact that the outer face of the second element (2) and the inner face of the housing of the third element (3) are substantially cylindrical, and by the fact that the means for connecting the second element (2) and the third element (3) comprise a coupling carried out by a thread (8) or by helicoidal parts (d, e) which are hollow or in relief.

3. Assembly according to any of claims 1 and 2, characterized by the fact that at least one flexible strip (a) of the second element comprises a plurality of tenons (5'), and by the fact that a more important number of corresponding grooves in series (4') is provided for in the first element (1) thus allowing the control of the relative position of these elements.

4. Assembly according to any of claims 1 to 3, characterized by the fact that the tenons (5, 5') and the grooves (4, 4') are triangular in longitudinal cross-section.

5. Assembly according to claim 1 and comprising four elements (1, 2, 3, 6), characterized by the fact that the supplementary element (6) fits between the second element (2) and the third one (3) and exerts an action analogous to that of a wedge on the second element, the connection between the third element (3) and the fourth element (6) being realized by helicoidal parts which are hollow or in relief (d and e) or by threads (8, 10).

6. Assembly according to claim 5, characterized by the fact that the action analogous to that of a wedge of the fourth element (6) is obtained by the fact that its inner surface corresponding to the outer conical surface of the second element (2) presents a conical shape.

7. Assembly according to claim 1 comprising five elements (1, 2, 3, 6, 12) and characterized by the fact that the tenons (5') which are provided for on one flexible strip (a') of the element (2) resiliently fit into some corresponding mortises (4') of the first element which constitutes the central bar (1), the third element (3) constituting the outer cover of the assembly, and the clamping of the second element (2) which its tenons (5') in the mortises (4') of the first element (1) being realized by a fifth element (12) which is operatively connected by a thread (13) to a corresponding thread (15) of the fourth element which ocnstitutes a plug (6).

8. Assembly according to claim 7, characterized by the fact that an outer slot (11) is formed in the plug (6) in order to allow its screwing and unscrewing by means of a screw-driver or of a coin.

9. Assembly according to any of claims 7 and 7, characterized by the fact that the fifth element (12) comprises an inner face inclined in longitudinal cross-section at an angle (α) with respect to the axis of the assembly which is equal to the angle of inclination in longitudinal cross-section of the outer face of the strip (a') of the element (12) above its base (t).

10. Use of an assembly according to any of claims 1 to 9 for realizing a door-handle.

Fig.1

Fig.2
A-A'

Fig.3
B-B'

Fig.4
C-C'

9

Fig:5

Fig:6

**Fig: 7**

**Fig: 8**
H – H'

**Fig: 9**
I – I'

0086713

Fig.10

J-J'

Fig.11

K-K'

Fig.12

15

*Fig:13*

L L'

2(a)

1

*Fig:14*

M M'

2(h)

1

*Fig:15*

N N'

b

c

2(l)

14

1

0086713

Fig.16

0 0'

11

Fig.17

w   5'   11   7   u   6

5   x

R

v

Q

13

15

a'

3

P

5'   11   7   u   6   S'

l

R'

12

14   Q'

15

4'

V

t   2

α

1

19

Fig.18  P-P'

Fig.19  Q-Q'

2
e
3

6
C
a'
a'
3
b
15

Fig.20  R-R'

6
3
r

Fig.21  S.S'

6
11
3

Fig.22

3
16
17
18
2
1

*Fig.23*